# EUROPEAN PATENT APPLICATION

(11) **EP 4 631 790 A1**
(43) Date of publication of application: **15.10.2025**
(21) Application number: 24169757.2
(22) Date of filing: 11.04.2024
(51) Int. Cl.: B60Q 3/14, B60Q 3/64, B60Q 3/78, B60R 13/00, F21S 43/243, F21S 43/235, F21S 43/20, F21S 43/31, F21S 43/40, F21V 8/00, F21W 104/00, F21W 106/00

(54) **VEHICLE ILLUMINATION DEVICE FOR TRANSFERRING LIGHT THROUGH A VEHICLE COMPONENT, ASSEMBLY FOR CREATING THE DEVICE, AND VEHICLE COMPONENT WITH THE DEVICE**

(71) Applicant: Hella Autotechnik Nova s.r.o., 78985 Mohelnice (CZ)
(72) Inventor: Krobot, Michal, 78971 Lestina (CZ); Simicek, Marek, 779 00 Olomouc (CZ); Tomko, Samuel, 61400 Brno (CZ); Tucek, Pavel, 779 00 Olomouc (CZ)
(74) Representative: Behr-Wenning, Gregor

(57) **Abstract**

Vehicle illumination device, assembly for creating the device and a vehicle component with the device. The device comprises a light source (1), a light-guiding member (2), and a reflective light-coupling chamber (7). The light-coupling chamber (7) comprises an output aperture (9), wherein an input portion (3) of the light-guiding member (2) extends through the output aperture (9) to receive light from the chamber and provide it to an output portion (4) of the light-guiding member (2) which is outside of the light-coupling chamber (7).

## Description

### Technical field

The present invention relates to illumination devices for vehicles, especially to a decorative lamps for vehicle exterior, such as illuminated emblem or name of make and/or model of the vehicle.

### Background of the Invention

It is known in the state of the art to provide illuminated emblems for vehicles and similar decorative exterior lamps. This type of illumination devices serves mainly to make the vehicle and its brand easier to recognize and/or to improve its appearance. Example of such an illuminated emblem is described in document US2013335997A1.

One problem associated with this type of vehicle lamps is that they are usually located on an exterior side of some part of vehicle body - typically hood or trunk lid. This part then needs to be provided with a hole for power cables (when light sources are on the outside) and/or for mounting of the lamp (e.g., for extending a lightguide from light sources on the inner side of the part to the outside).

Further complications can arise when the vehicle part has a large manufacturing tolerances for its thickness. For example, an automobile hood can include two layers of metal sheet with an air gap between the sheets, and the distance between the sheets can vary between different automobiles, e.g., by several millimeters. Mounting an emblem with a lightguide passing through the sheets is than difficult since the manufacturing tolerance can make assembly impossible or at least quite complicated. Light intensity of the emblem can then significantly depend on the thickness, which is undesirable. One way of avoiding this problem is to use a wireless energy transfer, as described in document EP4286219A1. This however requires a light source to be placed on the outside of the vehicle part, and wireless transfer of energy can be less efficient.

It would therefore be advantageous to provide an illumination device for a vehicle which could be mounted through a vehicle component such that its light source is on the inside, and it is visible from the outside, and variance in thickness of this component would not significantly complicate mounting of the device or disrupt its intensity.

### Summary of the Invention

The shortcomings of the solutions known in the prior art are to some extent eliminated by a vehicle illumination device comprising a light source, a light-guiding member and light-coupling chamber. The light-guiding member comprises an input portion and an output portion, wherein the input portion includes at least one input surface for letting light into the light-guiding member and the output portion includes at least one output surface for emitting light from the light-guiding member. There is a reflective surface on inner wall of the light-coupling chamber for diffusing light from the light source and coupling it into the input portion of the light-guiding member. The light source is arranged such that it can emit light into the light-coupling chamber, e.g., the light source can be placed inside of the chamber, at least by its light-emitting part. The light-coupling chamber comprises an output aperture, wherein the input portion of the light-guiding member extends through the output aperture and the output portion of the light-guiding member is outside of the light-coupling chamber.

The light-coupling chamber preferably has at least 90% of its inner surface covered with reflective surface(s), preferably at least 95% or even at least 99% of the chamber's inner surface is reflective. Reflectivity of the reflective surfaces is preferably at least 90%, preferably more than 95%. For example, aluminum or silver coatings can be used for the reflective surfaces. It is also possible to use a white material such as PMMA or polycarbonate with white pigment, for the walls to achieve the reflectivity, or to use chamber from a metal which is polished on the inside. The chamber can have any shape, e.g., depending on shape of the output surface or on space available in the vehicle. The higher is its reflectivity, i.e., the higher the coverage of the walls with the reflective coating and the higher the coating's reflectivity, the better (i.e., smaller light losses). The light from the light source can then get reflected in the chamber as long as needed until it gets successfully coupled into the light-guiding member and transferred through the aperture. The chamber can thus have more complexly shaped surfaces (e.g., parabolical or spherical or with micro-optics), but it is not necessary (e.g., the surfaces can be planar). The light source can be oriented such that most of its light is successfully coupled into the lightguide only after multiple reflections on chamber walls, to increase the chamber's light-diffusing function.

The walls of the chamber can e.g., be from plastic or metal. The chamber is preferably closed to prevent light leakage. Attachment of the chamber to a component of the vehicle which is to be provided with the device can be done e.g., with screws, by gluing or welding, etc. The component can be any part of the vehicle, on the exterior as well as in the interior of the vehicle, and the vehicle can especially be an automobile, but it can also be a different vehicle such as motorbike or boat. The component of the vehicle is preferably relatively thin, e.g., up to 10 cm, preferably up to 5 cm or up to 2 cm, and it can be from any material, most commonly it can be from metal or plastic. It can especially be a part of vehicle body (a sheet or multiple sheets forming a hood, an outer cover of a trunk lid, side of the vehicle, roof etc.). It can also be e.g., a part of a dashboard or of inner wall lining.

The desired diffusion of light can thus be ensured by the bouncing of the light from the walls which scatters the light in different directions. It can thus enter the light-guiding member from many different directions so the light in the member can be much more homogeneous or soft than if the light source was simply directed to the input surface. Any light which is not coupled into the light-guiding member successfully, i.e., it leaves the light-guiding member right away, remains in the chamber and gets successfully coupled at some point later. It is also possible to provide the chamber walls with further optical elements, such as micro-optical reflector elements, to improve the quality of light coupled into the light-guiding member.

The aperture in the chamber, which allows the light-guiding member to pass through and thus lets the light out, can have any shape and size, preferably corresponding to shape and size of the light-guiding member. E.g., the aperture can be in shape of a line, of letters, of a logo etc. It can also be formed by a plurality of smaller apertures, e.g., to let the light out without compromising structure of the respective chamber wall. For example, letter such as "O" or "A" have a closed loop, so forming them simply by cutting an O-shaped or A-shaped aperture is not possible if the middle portion of the letter is supposed to remain closed. Using smaller apertures, e.g., circular holes, arranged in the desired O-shape or A-shape can solve this problem. The light-guiding member can than have its middle portion from a plurality of correspondingly shaped thin lightguides, which can be connected inside of the chamber (but do not have to be connected, e.g., they can have free ends and can only be connected to the output portion) and which guide the light into the output portion.

The outside part of the device, which is on the visible side of the component and outputs the light which is to be seen (i.e., at least a part of the output portion), can have any shape corresponding to a desired appearance or function. It can e.g., be a simple line which can e.g., be used on a dashboard or along vehicle doors or front grille. It can also be shaped and/or colored into a car brand emblem, into letters spelling car make or model, into letters chosen by customer, etc.

The light-guiding member can be from any standard lightguide material, such as PMMA, polycarbonate, silicone or glass. It can be from one or more pieces and can combine several different materials. Its input surface(s) and output surface(s) can have any shape and can include micro-optical elements, diffusion elements, graining etc., to achieve any desired optical function. The material of the light-guiding member can comprise pigment for coloring light, particles for diffusing light, luminescent particles etc. The light-guiding member can have some of its surfaces provided with further treatment such as an opaque coating to shade the surface (especially side surfaces), reflective coating, paint etc.

The invention thus provides a lamp which can be partially located on the inside (meaning the side which can be unseen, such as under the hood or inside of dashboard), wherein the inside part includes a light source so there is no need to guide power cables to the outside, and partially located on the outside (the visible part of the component where the light is supposed to be emitted), wherein the outside part includes a light-output surface. Thanks to using the light-coupling chamber, the guided light is more homogeneous (e.g., there are less bright spots visible on the output surface(s)) and is less affected by changes in position of components or their distance. The chamber can also allow the device to be shorter because the light source does not have to be directly behind the light-guiding member. Since the light is being diffused before entering the light-guiding member, there are less strict requirements on the shape of the light-guiding member. It can thus be e.g., made flexible or can be divided into two parts with a gap between them, without affecting illumination quality too much, as will be described in more detail below.

The input portion and/or the output portion can include an elongated section for guiding light through a component of the vehicle, wherein the elongated section extends in direction from the input portion to the output portion (i.e., in direction of the member's optical axis). The elongated section can thus be the part of the member which ensures guiding of light into the desired direction towards the output surface(s). The elongated section can then also form a middle section of the member, which can e.g., be flexible. The elongated section can have substantially constant cross-section (when not stressed in case of a flexible section). The elongated portion, especially on the input portion, can make the portion movable more or less into the chamber, before the device is completely assembled and the member is e.g., glued to its final place. This movement can thus be used to adjust distance of the output portion from the chamber, which can be used to mount the same device to components of different thickness. With this movement, the amount of light-guiding material which is inside of the chamber also changes, which slightly changes the amount of in-coupled light, but thanks to the diffusion in the chamber due to its reflectivity, this change does not result in an unacceptable changes in intensity of light emitted from the output portion.

At least a part of the output portion can have a larger cross-section than the input portion. The part with the larger cross-section can be used to limit position of the output part, e.g., it can be pushed into an opening in the vehicle component until the larger part stops further movement by contacting the component. The larger part can also improve light output from the device.

The light-guiding member has an optical axis which extends from the input portion towards the output portion - this axis is advantageously straight but can also be curved and it corresponds to a general direction of light propagation through the light-guiding member. The light source can then be offset from the optical axis. The light is then coupled into the light-guiding member less directly which improves homogeneity, since there won't be a bright spot (direct view of the light source) visible when looking at the output portion through the front. Analogous effect can also be provided by making the main output direction of the light source non-parallel with the axis, even if the light source is located on the axis. The light from the light source is then still not inputted into the light-guiding member directly in the direction of the axis.

The input portion and the output portion can be connected wherein the whole light-guiding member can then be from one piece of material. This version can be easier to manufacture and thus also cheaper. If balancing of varying thickness between different vehicle component is needed, the input portion can be pushed further into the chamber as described above.

The input portion and the output portion can be separated, wherein the input portion has an output surface and the output portion has an input surface, and these surfaces are facing each other. The input portion thus in-couples light from the chamber and directs it (already diffused so the light quality is much better and distance to the output portion has much lesser impact) toward the output portion. A gap can be between the portions which can be used to balance the above-mentioned thickness differences of the vehicle component. The gap can be filled by further material in some variants of the invention during assembly, e.g., a silicone can be applied between the portions to increase the devices sturdiness and/or improve light transfer between the portions.

The input portion and the output portion can be connected by a flexible light-guiding portion which can be elastically stretched or compressed in direction from the input portion towards the output portion by at least 10%, preferably at least 25%. This flexibility can then be used to balance the thickness variance, as mentioned above. A silicone is suitable light-guiding material which can be made sufficiently flexible. Flexibility can also be achieved by shape of the material, e.g., by forming a polycarbonate into a spring so that it can be compressed/extended and can still transfer light.

The input portion can include a convex input surface. It can also (additionally or alternatively) include a planar input surface. A skilled person can choose suitable shape and size of these and other surfaces and parts according to their individual requirements.

The shortcomings of the solutions known in the prior art are to some extent also eliminated by a vehicle component which comprises a non-translucent surface and the vehicle illumination device according to the invention. The light-coupling chamber is attached on one side of the non-translucent surface and the output portion extends to an opposite side of the non-translucent surface. The non-translucent surface can e.g., be a metal sheet, e.g., when the component is a hood. Different thickness of different hoods (or other components), regardless of whether it is intentional or a result of manufacturing imprecisions, can then be balanced by any of the above-mentioned mechanisms (flexibility, separation of the light-guiding member, movement of the member to/from the chamber).

The component can include at least two layers with a space between the layers. For such a component, the device can be the most advantageous, because the size of the space between the layers can differ quite a lot between different vehicles.

The shortcomings of the solutions known in the prior art are to some extent also eliminated by an assembly for creating the vehicle illumination device according to the invention. The assembly comprises:
- a light source,
- a light-guiding member having an input portion and an output portion, wherein the input portion includes at least one input surface for letting light into the light-guiding member and the output portion includes at least one output surface for emitting light from the light-guiding member,
- a light-coupling chamber with a reflective surface on inner wall of the light-coupling chamber for diffusing light from the light source and coupling it into the input portion of the light-guiding member,
wherein the light-coupling chamber comprises an output aperture, wherein the input portion of the light-guiding member is at least partially insertable through the output aperture to guide light from the light-coupling chamber to the output surface of the output portion.

The light source can thus be positioned into the chamber or can at least be oriented such that it provides light into the chamber. The light-guiding member can then be mounted such that it has its input surface of the input portion inside of the chamber and the output surface of the output portion outside of the chamber. The assembly can thus be constructed or used analogously to the device as described above.

### Description of drawings

A summary of the invention is further described by means of exemplary embodiments thereof, which are described with reference to the accompanying drawings, in which:
- Fig 1.: Shows a schematic drawing of a cross-section of a vehicle illumination device according to a first embodiment of the invention.
- Fig 2.: Schematically shows how some exemplary light rays can travel through the cross-section from fig. 1, wherein each light ray originates in a light source, passes through a light-coupling chamber, enters a light-guiding member, passes through the light-guiding member and at the same time through a component carrying the device, and finally leaves the light-guiding member and the device.
- Fig 3.: Shows a schematic drawing of a cross-section of a vehicle illumination device according to a second embodiment of the invention which differs from the first embodiment in the shape of the light-guiding member and in number of light sources.
- Fig 4.: Shows the cross-section from fig. 3 where the device is mounted to a thicker vehicle component.
- Fig 5.: Shows a schematic drawing of a cross-section of a vehicle illumination device according to a third embodiment of the invention which differs from the first embodiment in the shape of the light-guiding member, the shape of the light-coupling chamber and in structure of the vehicle component carrying the device.
- Fig 6.: Shows a schematic drawing of a cross-section of a vehicle illumination device according to a fourth embodiment of the invention which implements a two-part light-guiding member to balance differences in thickness of the component carrying the device.
- Fig 7.: Shows a schematic drawing of a cross-section of a vehicle illumination device according to a fifth embodiment of the invention which differs from the fourth embodiment in shape of the light-guiding member, and in construction of the light-coupling chamber.
- Fig 8.: Shows a schematic drawing of a cross-section of a vehicle illumination device according to a sixth embodiment of the invention which differs from the fifth embodiment in an added light-guiding material connecting the two-part light-guiding member, wherein this material is added during assembly of the device to the vehicle component.
- Fig 9.: Shows a schematic drawing of a cross-section of a vehicle illumination device according to a seventh embodiment of the invention which differs from the fourth embodiment in added flexible tube-shaped reflector to increase light transfer efficiency.
- Fig 10.: Shows a schematic drawing of a cross-section of a vehicle illumination device according to an eighth embodiment of the invention which implements a flexible light-guiding member to balance differences in thickness of the component carrying the device.
- Fig 11.: Shows the cross-section from fig. 10 where the device is mounted to a thinner vehicle component, so the light-guiding member is compressed such that it is shorter and wider.
- Fig 12.: Shows several alternative variants of cross-section of the light-guiding member.
- Fig 13.: Shows a schematic drawing of a perspective view of outer side of the light-guiding member corresponding to any of the first three embodiments.
- Fig 14.: Shows a perspective view of inner side of the light-guiding member from fig. 13.
- Fig 15.: Shows a side view of the light-guiding member from fig. 13.
- Fig 16.: Shows a schematic drawing of a perspective view of inner side of the light-guiding member corresponding to any one of the fourth to seventh embodiments.
- Fig 17.: Shows a schematic drawing of a cross-section of a vehicle illumination device according to a ninth embodiment which includes a flexible lightguiding member.
- Fig 18.: Shows the cross-section from fig. 17 where the device is mounted to a thinner vehicle component, so the light-guiding member is pushed against a wall of the light-coupling chamber and bent by contact with the wall.
- Fig 19.: Shows a schematic perspective drawing of an automobile with an illuminated vehicle emblem formed by the vehicle illumination device.

### Exemplary Embodiments of the Invention

The invention will be further described by means of exemplary embodiments with reference to the respective drawings.

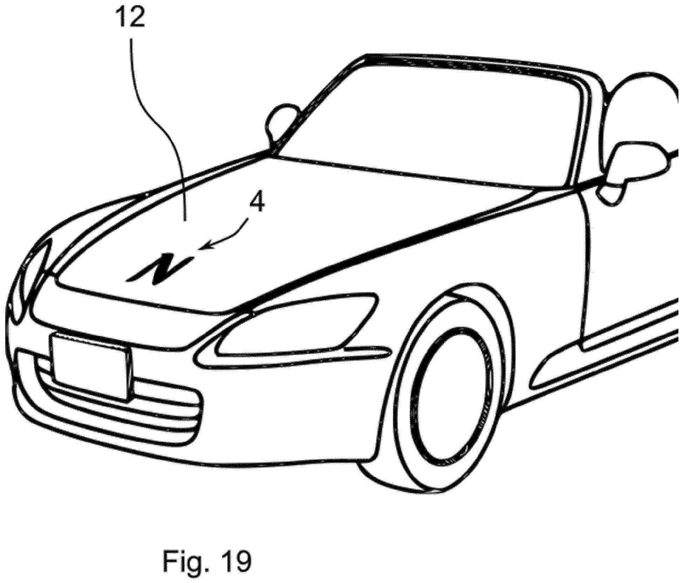

In all below-described embodiments, the vehicle illumination device includes a light-coupling chamber 7 and a light-guiding member 2 and is mounted to a flat vehicle component 12. The light-coupling chamber 7 is a closed chamber with reflective surface 8, e.g., provided by a reflective coating, on all its inner walls (at least some portion of the wall(s) has this coating in any embodiment, but it is not shown in some of the simplified drawings) and comprises at least one LED light source 1 which fills the chamber with light. The light-guiding member 2 has an input portion 3 which extends into the light-coupling chamber 7 through an aperture 9 provided in its wall, and an output portion 4, which extends through the component 12 to its outer visible surface where illumination is required. The input portion 3 thus has at least one input surface 5 and the output portion 4 has at least one output surface 6. Shape of the chamber, of the light-guiding member 2 and of other device parts is different in different embodiments. The vehicle component 12 is, in these embodiments, a plastic interior lining in the vehicle's interior (components 12 with single layer 13) or a vehicle hood (see fig.19) (two-layer 13 components 12). Any other component 12 can however be provided with the device in alternative embodiments.

All the shown embodiments are to some extent adapted to balance thickness variance of the component 12, but they can be applied to components 12 with always constant thickness as well. Embodiments 1-3 use elongated input portion 3 which is (at some point during assembly before it is firmly connected) slidingly arranged in the aperture 9 of the light-coupling chamber 7. If the component 12 has larger thickness, the input portion 3 extends less into the chamber but can still work the same. Embodiments 4-7 use separation of the light-guiding member 2 into two parts, i.e., division of the input portion 3 and output portion 4. An air gap between the portions can then have various lengths to balance various thicknesses of the vehicle component 12. Embodiments 8 and 9 then use flexible material of the light-guiding member 2 for balancing the different thicknesses by elastic deformation of (a part of) the member.

### First embodiment:

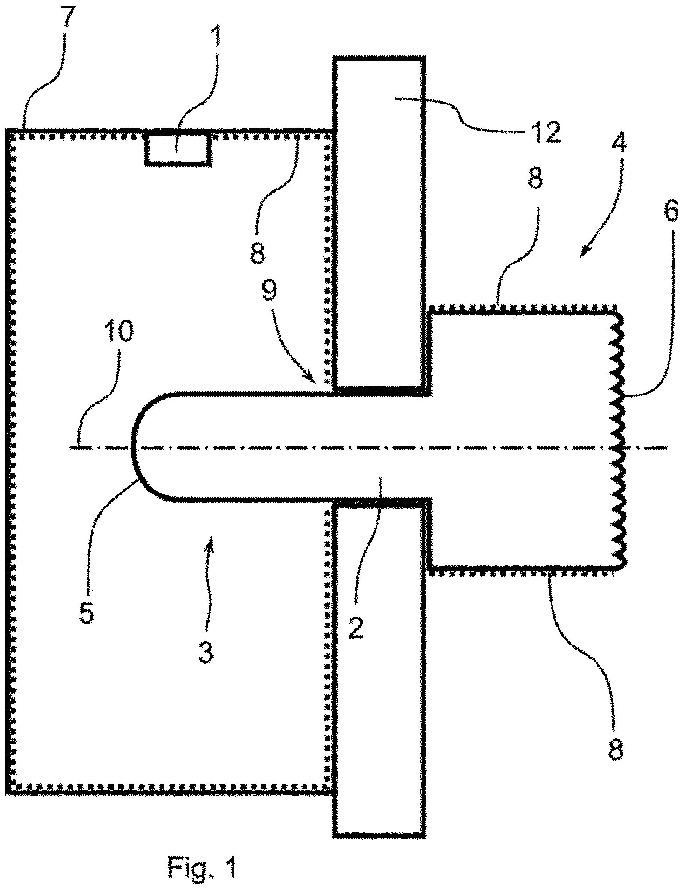

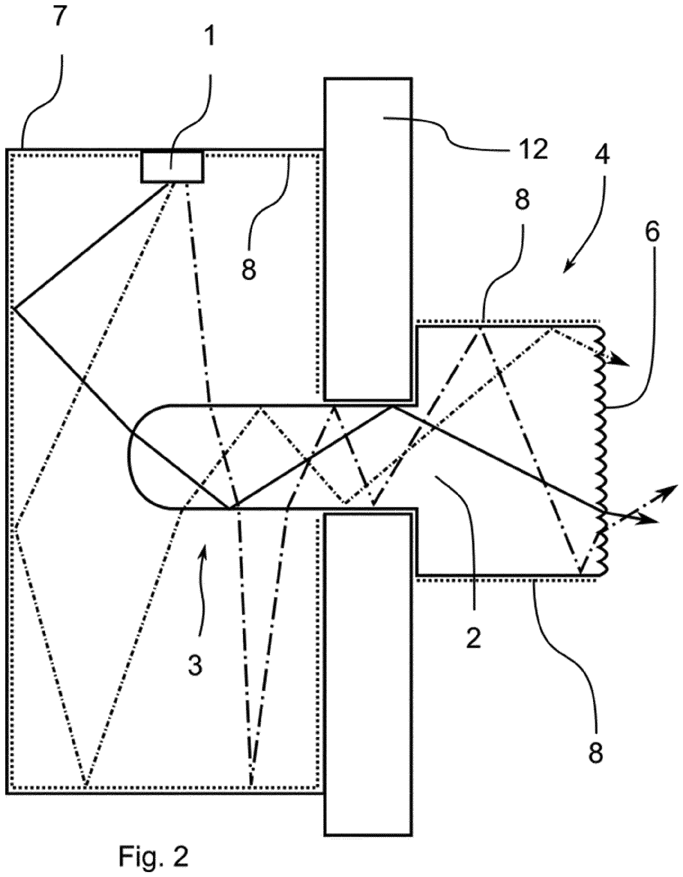

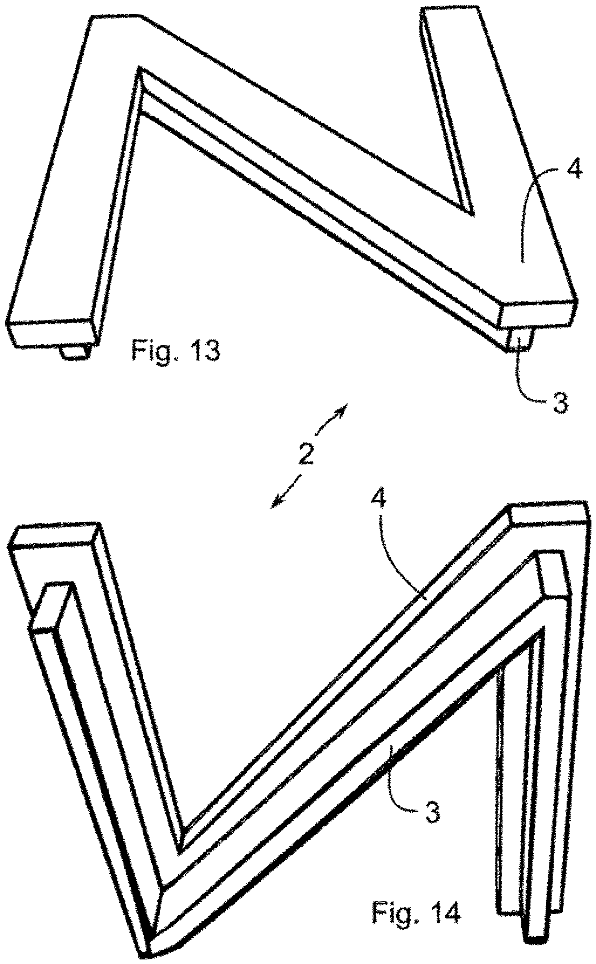

A first embodiment of the invention is shown in figs. 1, 2, 13, 14, and 15. Figs. 1 and 2 show a cross-section of the device along its optical axis 10 and figs. 13-15 show an exemplary letter "N" formed by shape of the light-guiding member 2, which can e.g., be a part of an illuminated automobile manufacturer name placed on an interior wall in this embodiment or on the hood (see fig. 19) in other embodiments.

The light-coupling chamber 7 in this embodiment has a cuboid shape. Its height is around 4 cm, its width is the same as the height and its thickness (measured in the direction of the axis 10) is about 2 cm. The cross-section is vertical and passes through the inclined part of the letter "N". When viewed from the front (i.e., from the direction towards which the light is emitted from the output portion 4. This direction can but does not have to correspond to travel direction of the vehicle), the letter thus covers most of the chamber. All the inner walls of the light-coupling chamber 7 are covered by aluminum reflective coating to form reflective surfaces 8 for bouncing light between the walls, and a single LED light source 1 is placed on the upper wall of the chamber. Power for the LED is provided by a cable passing through the wall.

The front wall of the light-coupling chamber 7 has an N-shaped aperture 9 and there is a corresponding aperture 9 through the vehicle component 12. The light-guiding member 2 is from a single piece of PMMA. It has an inner section, which is narrower with a constant cross-section and has a round input surface 5 on its free end, and an outer section which is wider and has an output surface 6 on its free end. The input portion 3 is formed from a part of the inner section and can freely slide in the aperture 9 to adjust the distance between the outer section and the chamber to accommodate a range of thicknesses of the vehicle component 12. Flat side walls of the input portion 3 also serve as input surfaces 5.

The output portion 4 is formed from the outer section and a part of the inner section. The outer section serves as a stop element when inserting the light-guiding member 2 through the component 12 and into the chamber. The output surface 6 is substantially flat and is provided with diffusion optics. Side walls of the outer section are covered with a reflective coating, i.e., they are reflective surfaces 8, to prevent any light from leaving the light-guiding member 2 through the side walls. Outer side of this coating is then painted black so that the illuminated letter has dark sides and is dark when not lit.

The length of the inner section is about 2 cm in this embodiment so the device can be used with components 12 with thickness ranging from substantially 0 to around 2 cm, preferably up to 1.5 cm so that a sufficient amount of light-guiding material protrudes into the light-coupling chamber 7. The light-guiding member 2 is pushed as far as possible during mounting. The chamber can be mounted to the inner side of the component 12 before or after the member is placed. Both these parts are glued to the respective surface 8 of the component 12. The length of the outer section is about 0.5 cm in this embodiment, though it is depicted larger in the accompanying illustration. This length defines how much the illuminated text protrudes from the automobile interior wall.

### Second embodiment:

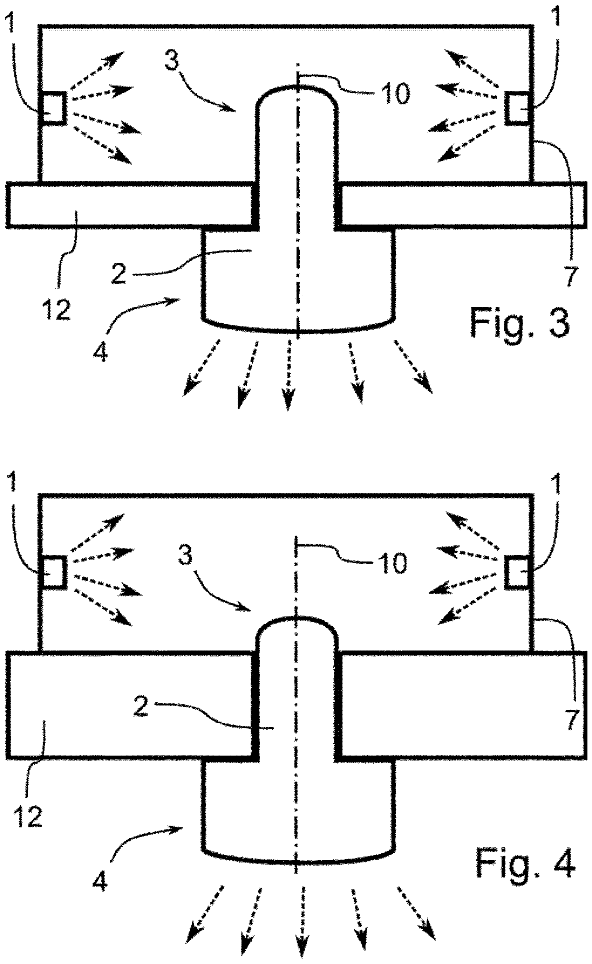

A second embodiment is shown in figs. 3, 4 and 13-15. It is similar to the first embodiment with the following differences. The output surface 6 if curved and does not have any micro-optics. The input portion 3 is shorter. The chamber has two light sources 1 (on top and on bottom; the drawings are shown with front side downwards). In the rest of the features, this embodiment is the same as the first embodiment. Figs. 3 a 4, however, clearly show how the position of the light-guiding member 2 changes with changes component 12 thickness.

### Third embodiment:

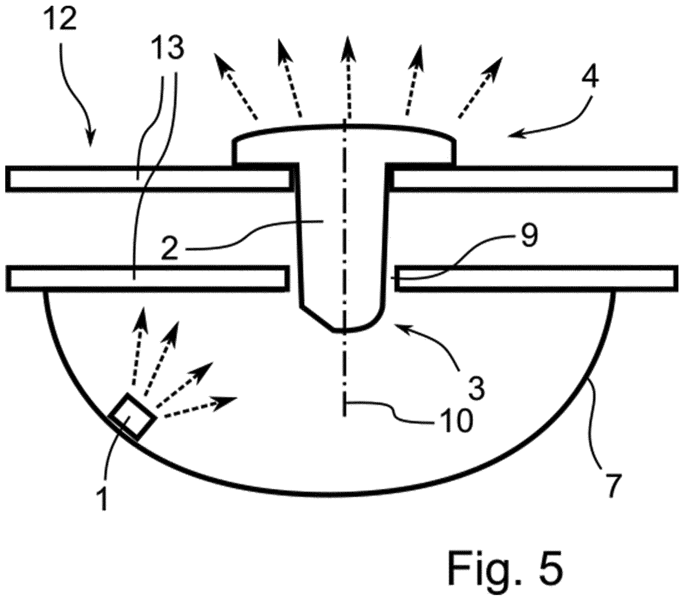

The main principles of this embodiment, shown in fig. 5, are again the same as in the first embodiment. The component 12 is a hood made from the metal sheets with a gap between them. The gap has significant manufacturing tolerances, and the device can balance the tolerances in the same way as described for the first embodiment.

The light-coupling chamber 7 has a semispherical shape in this embodiment, all its walls are again covered with the reflective surfaces 8 on the inside. A single LED light source 1 is used. The inner portion has a convex input surface 5 and a flat input surface 5 which faces towards the light source 1. The side walls of the input portion 3 can also serve as input surfaces 5, when the vehicle component 12 is thinner. Side walls in the middle of the light-guiding member 2 can be provided with reflective coating to prevent any light from passing through them to the gap between the sheet layers 13. The coating can e.g., cover two thirds (which are closer to the output portion 4) of the length of the thinner section of the light-guiding member 2 as shown in fig. 5, so that some light can enter through the side walls but light emission into the gap is significantly reduced.

### Fourth embodiment:

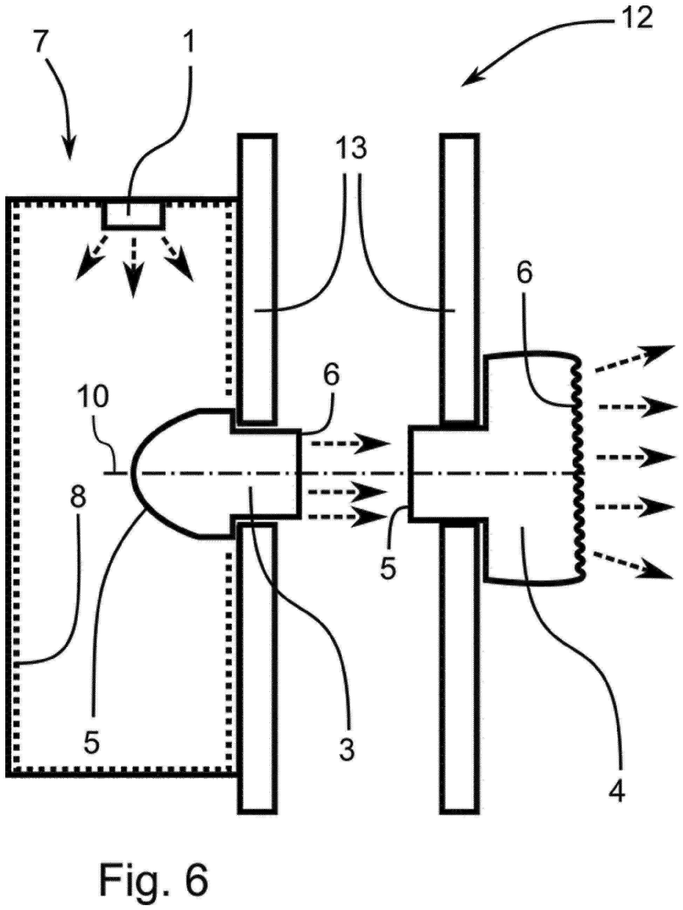

A fourth embodiment of the invention is shown in fig. 6. The light-coupling chamber 7 in this embodiment is substantially the same as in the first embodiment. The component 12 is a two-layer 13 hood. The main difference from the previous embodiments is in the light-guiding member 2, which is separated into two individual parts.

The input portion 3 has an elongated section which is narrower and passes through the chamber aperture 9 and through aperture 9 in an inner sheet of the vehicle component 12. It also has and input section which is wider so that it better receives light and serves as a stop element when mounting of the input portion 3. There is a round input surface 5 and flat side input surfaces 5. The input portion 3 can be fixed to the chamber before the chamber is mounted to the component 12, or it can be inserted through both apertures 9 after the chamber is already at its place. Gluing can again be used to fix all the parts together. Opposite to the input surface 5 of the input portion 3, there is its output surface 6. This output surface 6 is flat in this embodiment but can be curved or provided with optical sub-elements (e.g., micro-optics) in other embodiments.

The output portion 4 also has an elongated narrower section which passes through the outer sheet of the vehicle component 12 and has a flat input surface 5 directed towards the output surface 6 of the input portion 3. The light thus travels through an air gap when being guided towards the output surface 6 of the component 12. The output portion 4 further has a wider, visible section with an outer surface with micro-optical elements. Side walls of the elongated section are provided with reflective coating to limit stray light emitted between the layers 13. The side walls of the wider section of the output portion 4 also have this coating.

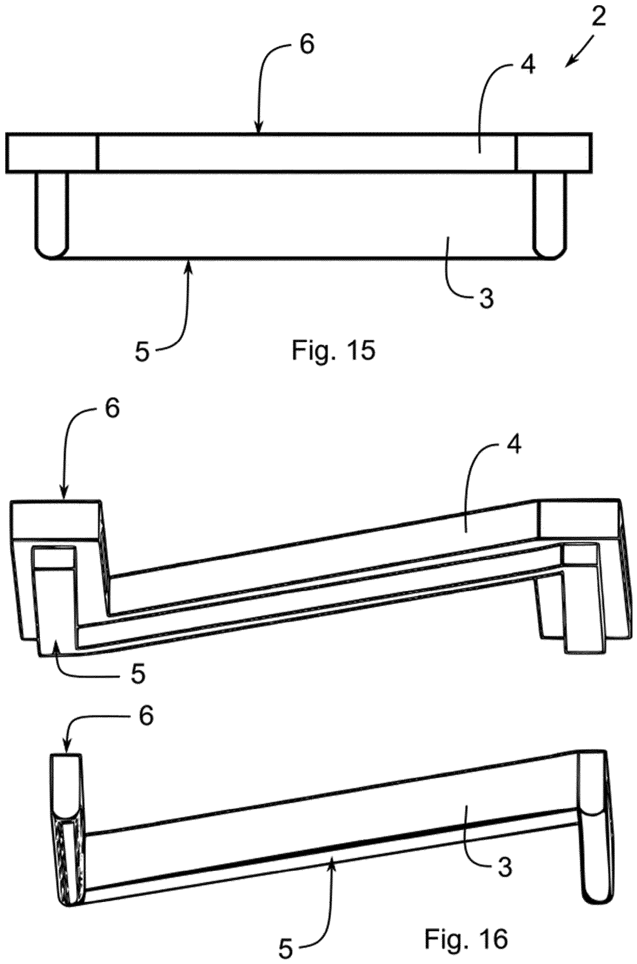

It is clear from fig. 6 that if the layers 13 were closer together, so would be the input portion 3 and output portion 4, without significantly affecting the device's illumination function. Overall shape of the light-guiding member 2 can be analogous to the one shown in fig. 16, which corresponds to the next embodiment and does not include the widened section of the input portion 3.

### Fifth embodiment:

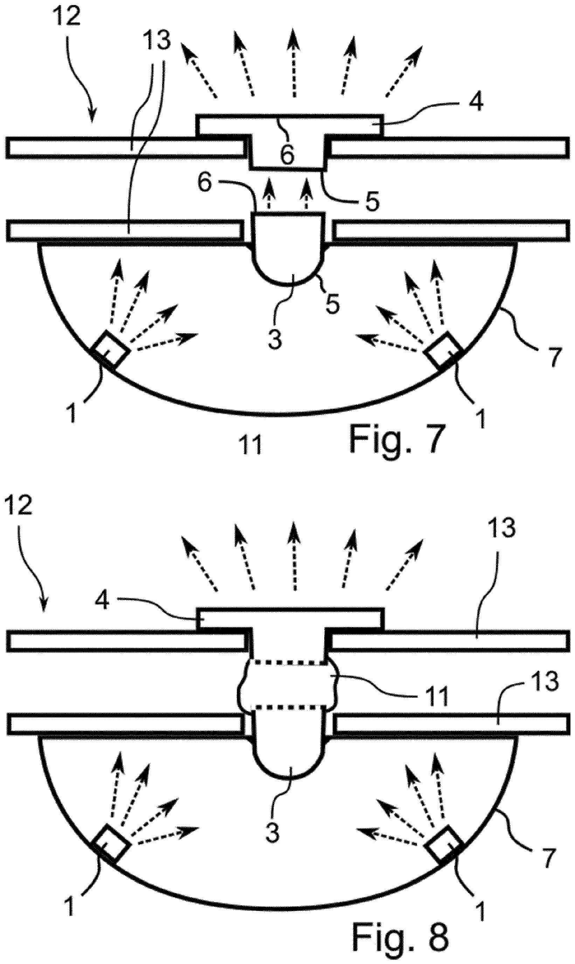

A fifth embodiment is shown in fig. 7 and 16. This embodiment has different construction but uses similar principles as the fourth embodiment. The light-coupling chamber 7 is semispherical and has two light sources 1 directed towards the input portion 3. The light sources 1 have their output axis inclined with respect to the optical axis 10 of the light-guiding member 2. The light-guiding member 2 is separated into two portions with an air gap in-between. The input portion 3 has a round input surface 5. Its cross-section is smaller than that of the aperture 9 in the chamber and the inner layer 13, so it is glued at its correct place in the chamber. It has a flat output surface 6. The whole input portion 3 forms a letter "N" as shown in fig. 16.

The output portion 4 has substantially a T-shaped cross-section. It has a flat input surface 5 and a flat output surface 6. The apertures 9 in the layers 13 of the vehicle component 12 are directly opposite to each other so both portions are mounted directly opposite to each other. This can help reduce light losses between the layers 13 - some light will still leave the light-guiding member 2 there, but most light will be transferred to the output part so that the illuminated letter will have sufficient intensity of light.

In embodiments where the vehicle component 12 has multiple layers 13, such as the fifth embodiment, the surrounding area between the layers 13 around the device can be shaded to prevent any light from leaking from between the layers 13 somewhere where it is not appropriate. For example, a foam can be applied between the layers 13 around the apertures 9 before the output portion 4 is mounted.

Other features of this embodiment can be implemented as they are in any preceding embodiment, especially the fourth embodiment.

### Sixth embodiment:

A sixth embodiment differs from the fifth embodiment only in addition of clear silicone between the input portion 3 and output portion 4 during assembly of the device. The silicone is applied as a paste and stiffens during the assembly. The silicone does not have the same optical properties as the input portion 3 and output portion 4, which are from PMMA, so there is a boundary between the two materials (dotted lines in fig. 8). Side walls formed from the silicone however reflect some light, which would otherwise leave the light-guiding member 2 and would illuminate the space between the layers 13. The silicone also helps keep both portions at their correct place, i.e., it can help glue the portions together, to the component 12, to the chamber etc.

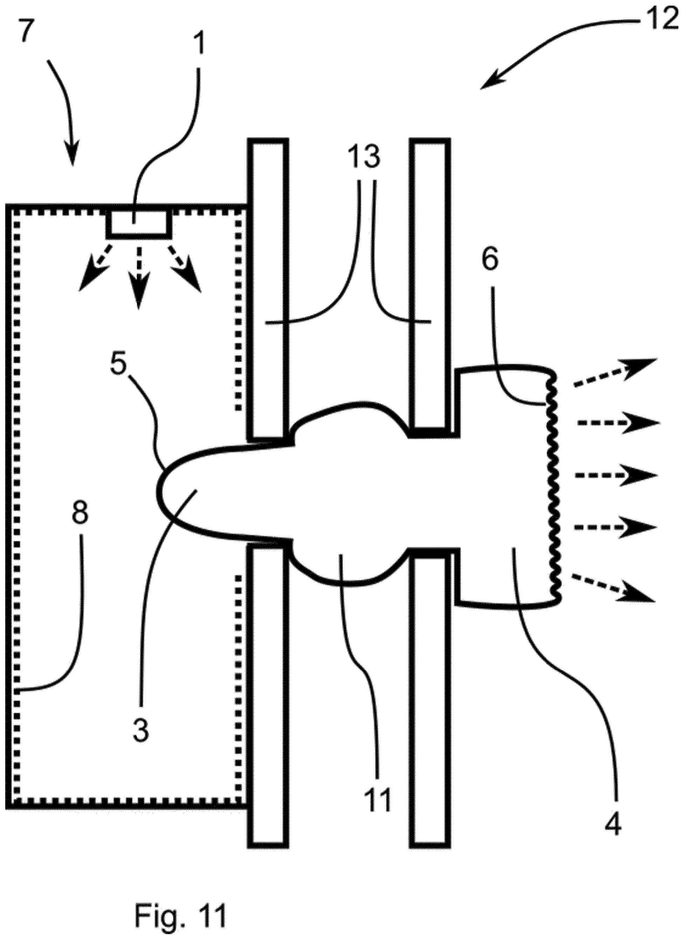

This exemplary embodiment thus shows that the light-guiding member 2 can be made from multiple different materials. It can especially include a middle flexible light-guiding portion 11 from a more flexible material than the input portion 3 and output portion 4. The outer potions are thus more resilient and sturdier, while the middle portion provides flexibility needed e.g., to balance thickness differences of the component 12. This middle portion can be created during the assembly, but it can also be created sooner, e.g., the whole light-guiding member 2 can be formed by a multi-component injection molding process. The middle portion then gets compressed as needed during the assembly, depending on the thickness of the component 12, similarly to the embodiment from fig. 11.

### Seventh embodiment:

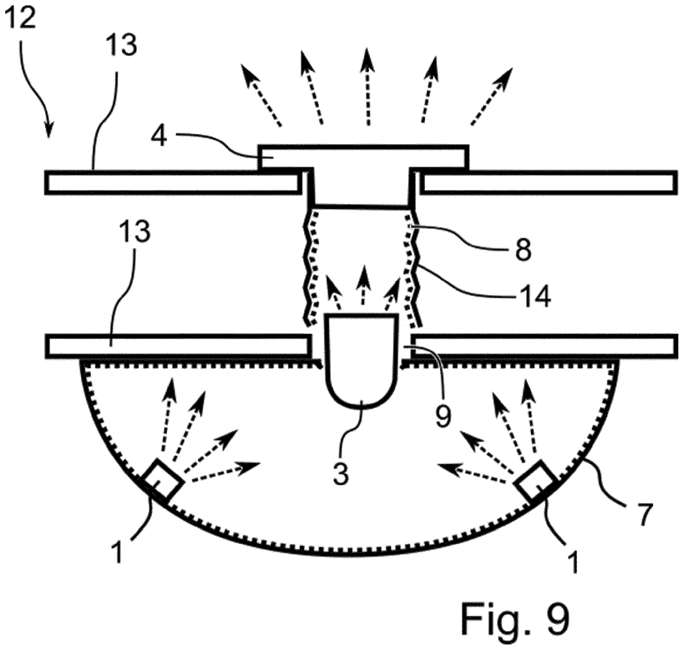

A seventh embodiment is shown in fig. 9. It differs from the fifth embodiment only in addition of a flexible reflector 14 between the input portion 3 and output portion 4. The reflector is from flexible plastic with reflective surface 8 on the inside and has a folded structure which enables it to be compressed and extended. It is fixed to the output portion 4 which is mounted to the component 12 after the input portion 3. The reflector has larger cross-section that the input portion 3 so that it can easily envelop the output surface 6 of the input portion 3. The reflector's elasticity has a tendency to extend the reflector when its is in the mounting position shown in the figure, so the free end of the reflector is pushed towards the inner layer 13. The input portion 3 is glued to the inner layer 13 and the free end of the reflector comes into contact with some of the surrounding glue before it dries. The reflector is thus fixed at both ends and improves light-transfer efficiency of the device.

In some variants of this embodiment, the apertures 9 in the component 12 are formed from multiple circular holes arranged in the desired shape (an N-shape as an example). The input portion 3 thus has a corresponding number of cylindrical protrusions which pass through the holes in the inner layer 13 and the output portion 4 has corresponding cylindrical protrusions extending towards the input portion 3 thorough the holes in the outer layer 13. There is thus a plurality of the flexible reflectors 14, each with a circular cross-section, so that they are easier to manufacture.

### Eighth embodiment:

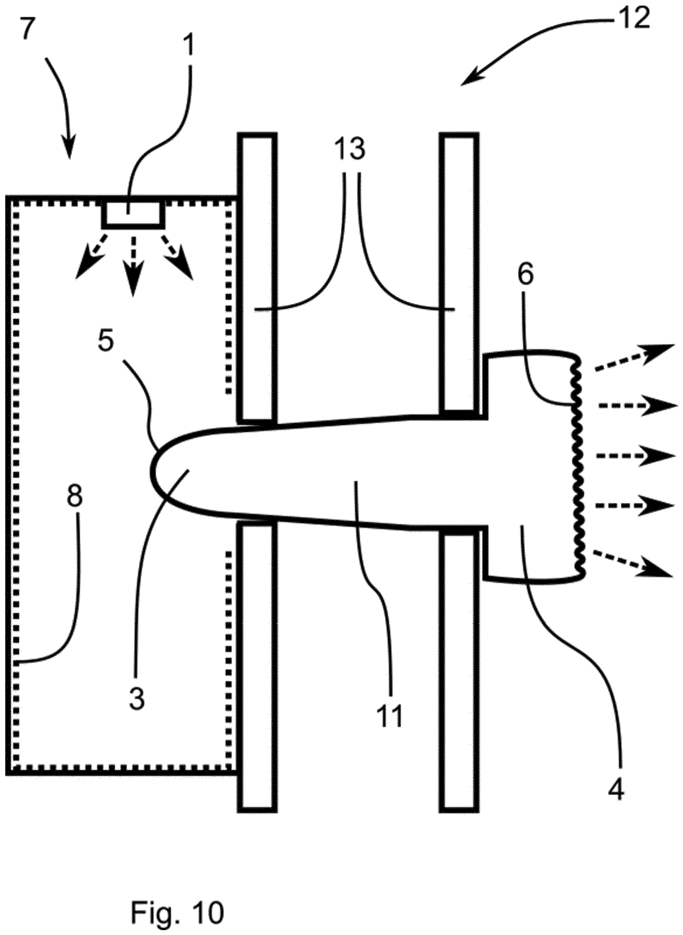

An eighth embodiment of the invention is shown in figs. 10 and 11. The light-coupling chamber 7 and the component 12 are the same as in the fourth embodiment. The main difference of this embodiment is that the light-guiding member 2 is made from silicone so that it is flexible. In this embodiment, the light-guiding member 2 can be elastically compressed such that it gets 25% shorter. This compressibility is used to balance out any variance in thickness of vehicle components 12.

As can be seen in fig. 10, the light-guiding member 2 has gradually decreasing cross-section towards the input portion 3. This simplifies inserting through both apertures 9 in the component 12. The input surface 5 in this embodiment is round, and the output surface 6 is flat with micro-optical diffusion elements.

During the assembly, the light-guiding member 2 is inserted from the outside. The non-constant cross-section ensures that roughly the same length of the input portion 3 passes through the inner layer 13 for any component 12 thickness up to a maximum thickness. Further pressing on the output portion 4 causes compression of the middle portion of the light-guiding member 2 (see fig. 11), which increases its width. The output portion 4 has a wider section which sits on the outer surface of the component 12 and can be glued therein. The light-coupling chamber 7 can be mounted before or after the light-guiding member 2.

### Ninth embodiment:

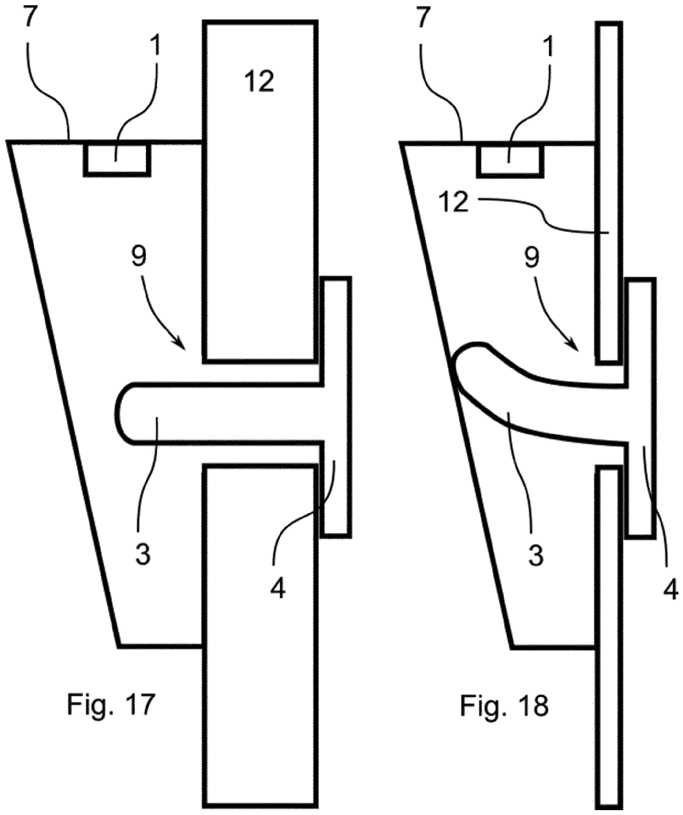

A ninth embodiment is shown in figs. 17 and 18. The light-guiding member 2 is again made from silicone or similar flexible material. The output portion 4 has a wider section which forms the outside part of the device. It can include any optical elements, shading elements, reflective elements etc. The rest of the light-guiding member 2 has a constant cross-section. The input portion 3 is formed from this part and has a rounded input surface 5.

The light-coupling chamber 7 has a trapezoidal cross-section. Its back wall, which is opposite to the wall contacting the component 12, is inclined. The chamber is longer at the top, where the light source 1 is, than at the bottom. The walls of the chamber are provided with a reflective surface(s) 8, analogously to other above-described embodiments.

The constant-cross-section section of the light-guiding member 2 is longer than the chamber. For thinner components 12 (fig. 18), the free end of the light-guiding member 2 thus contacts the inclined chamber wall. This results in bending of the light-guiding member 2 and this bending is thus used to balance any thickness differences between different vehicle components 12. At the corners of the N-shape of the light-guiding member 2, the bending is more complicated, and the silicone gets compressed as well, but its flexibility is such that it can be elastically deformed against the chamber wall as needed.

In a variant of this embodiment, the apertures 9 in the component 12, at least in an inner layer 13 if it has layers 13, can be formed from smaller holes as described above. The input portion 3 is then advantageously non-continuous, i.e., it is formed from a plurality of cylindrical protrusions attached to the output portion 4. Each of these protrusions can then bend much more easily against the back wall of the chamber, and each protrusion provides some light to the output portion 4.

### Tenth embodiment:

A tenth embodiment of the invention is an assembly for forming the device according to a first embodiment. The assembly thus comprises the light-coupling chamber 7 with the light source 1 and the reflective surfaces 8, and the light-guiding member 2 as shown in figs. 1, 2, 13, 14 and 15. The assembly can be mounted to a vehicle component 12 to create the device as shown in fig. 1. The chamber can thus be attached to an inner side of the component 12, the light-guiding member 2 can be inserted through the aligned apertures 9 and then fixed to the component 12, and the light source 1 can be wired to a power source of the vehicle.

In further variants of the embodiment, the assembly is adjusted accordingly with any other of the embodiments to form other embodiments of the device.

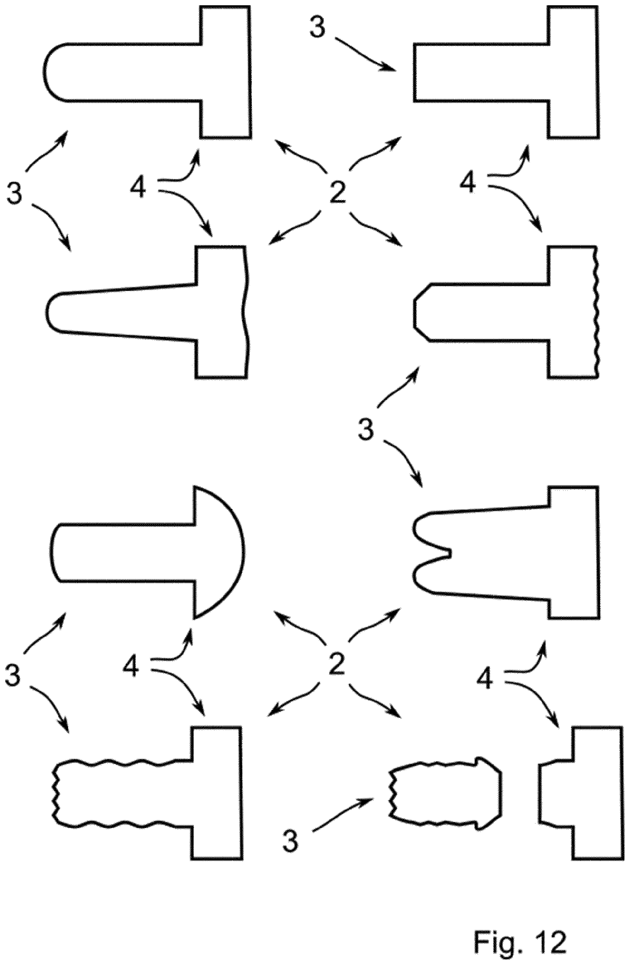

Fig. 12 shows several alternatively shaped light-guiding members 2. Each of these members can be implemented in any of the above-described embodiments or in further embodiments, possibly with further modifications. For example, the single-piece members can be separated into multiple parts (analogously to the bottom right image in fig. 12, where the input portion 3 is further provided with a stop element inclined towards the front such that it can be hooked in an aperture 9 of an inner layer 13 of a vehicle component 12). These examples can be combined between each other, e.g., any shape of the output surface 6 can be combined with any shape of the input surface 5 etc.

Similarly, it will be apparent to a skilled person that the depicted embodiments can also be combined. For example, the different shapes of the chambers can be used with different light-guiding members 2 than depicted, various shapes of output surfaces 6 can be used in any embodiment, different materials can be used for the light-guiding members 2 etc. The reflective surface(s) 8 can in any embodiment be provided by making the chamber walls from a white material, especially white plastic material such as PMMA. Using a white material can be cheaper than using metallic coatings and can provide sufficient reflexivity. Metal walls can also be used for the chamber, with polished surfaces on the inside to provide the required reflexivity.

Further adaptations and modifications of the embodiments described above may be accomplished by one of ordinary skill in the art without departing from the scope of the present invention.

### Reference list

- 1.: light source
- 2.: light-guiding member
- 3.: input portion
- 4.: output portion
- 5.: input surface
- 6.: output surface
- 7.: light-coupling chamber
- 8.: reflective surface
- 9.: aperture
- 10.: axis
- 11.: flexible light-guiding portion
- 12.: component
- 13.: layer
- 14.: flexible reflector

## Claims

1. Vehicle illumination device comprising a light source (1) and a light-guiding member (2) having an input portion (3) and an output portion (4), wherein the input portion (3) includes at least one input surface (5) for letting light into the light-guiding member (2) and the output portion (4) includes at least one output surface (6) for emitting light from the light-guiding member (2), **characterized in that** the device further comprises a light-coupling chamber (7) and a reflective surface (8) on inner wall of the light-coupling chamber (7) for diffusing light from the light source (1) and coupling it into the input portion (3) of the light-guiding member (2), wherein the light source (1) is arranged for emitting light into the light-coupling chamber (7) and the light-coupling chamber (7) comprises an output aperture (9), wherein the input portion (3) of the light-guiding member (2) extends through the output aperture (9) and the output portion (4) of the light-guiding member (2) is outside of the light-coupling chamber (7).

2. The vehicle illumination device according to claim 1 **wherein** the input portion (3) and/or the output portion (4) includes an elongated section for guiding light through a component (12) of the vehicle, wherein the elongated section extends in direction from the input portion (3) to the output portion (4).

3. The vehicle illumination device according to any preceding claim **wherein** at least a part of the output portion (4) has a larger cross-section than the input portion (3).

4. The vehicle illumination device according to any preceding claim **wherein** the light-guiding member (2) has an optical axis (10) which extends from the input portion (3) towards the output portion (4), wherein the light source (1) is offset from the optical axis (10).

5. The vehicle illumination device according to any preceding claim **wherein** the input portion (3) and the output portion (4) are connected wherein the whole light-guiding member (2) is from one piece of material.

6. The vehicle illumination device according to any one of claims 1 to 4 **wherein** the input portion (3) and the output portion (4) are separated, wherein the input portion (3) has an output surface (6), and the output portion (4) has an input surface (5) for receiving light from the input portion's (3) output surface (6).

7. The vehicle illumination device according to any one of claims 1 to 4 **wherein** the input portion (3) and the output portion (4) are connected by a flexible light-guiding portion (11) which can be elastically stretched or compressed in direction from the input portion (3) towards the output portion (4) by at least 10%.

8. The vehicle illumination device according to any preceding claim **wherein** the input portion (3) includes a convex input surface (5).

9. The vehicle illumination device according to any preceding claim **wherein** the input portion (3) includes a planar input surface (5).

10. A vehicle component (12) which comprises a non-translucent surface **characterized in that** the component (12) comprises the vehicle illumination device according to any preceding claim, wherein the light-coupling chamber (7) is attached on one side of the non-translucent surface and the output portion (4) extends to an opposite side of the non-translucent surface.

11. The vehicle component (12) according to claim 10 **wherein,** the component (12) includes at least two layers (13) with a space between the layers (13).

12. An assembly for creating the vehicle illumination device according to any one of claims 1 to 9 **characterized in that** the assembly comprises:
• a light source (1);
• a light-guiding member (2) having an input portion (3) and an output portion (4), wherein the input portion (3) includes at least one input surface (5) for letting light into the light-guiding member (2) and the output portion (4) includes at least one output surface (6) for emitting light from the light-guiding member (2);
• a light-coupling chamber (7) with a reflective surface (8) on inner wall of the light-coupling chamber (7) for diffusing light from the light source (1) and coupling it into the input portion (3) of the light-guiding member (2);
• wherein the light-coupling chamber (7) comprises an output aperture (9), wherein the input portion (3) of the light-guiding member (2) is at least partially insertable through the output aperture (9) to guide light from the light-coupling chamber (7) to the output surface (6) of the output portion (4).
